# EUROPÄISCHE PATENTSCHRIFT

(11) **EP 1 394 086 B1**
(45) Veröffentlichungstag und Bekanntmachung des Hinweises auf die Patenterteilung: **09.05.2007**
(21) Anmeldenummer: 03102280.9
(22) Anmeldetag: 24.07.2003
(51) Int. Cl.: B65G 53/66

(54) **Fördervorrichtung für Schüttgut**
Conveying apparatus for bulk material
Appareil transporteur pour produits en vrac

(30) Priorität: 24.08.2002 DE 10238946
(43) Veröffentlichungstag der Anmeldung: 03.03.2004
(73) Patentinhaber: MANN + HUMMEL ProTec GmbH, 64625 Bensheim (DE)
(72) Erfinder: Goth, Gerhard, 71726, Benningen (DE)
(74) Vertreter: Voth, Gerhard

(56) Entgegenhaltungen:
- US-A- 3 851 925
- US-A- 4 932 423
- US-A- 5 000 197
- US-A- 5 247 722

## Beschreibung

Die Erfindung betrifft eine Fördervorrichtung für schüttfähiges Fördergut, beispielsweise Kunststoffgranulat oder -pulver, mit mehreren Fördergeräten zur Bearbeitung des Fördergutes, einem Vorratsbehälter für das Fördergut sowie mit einer mit einem Saugrüssel versehenen Förderleitung für das Fördergut, und mit einer an die Fördergeräte über eine Saugleitung angeschlossenen Unterdruckquelle (siehe z.B. das Dokument US-A-5000197).

Zur Herstellung von Kunststoffartikeln, beispielsweise aus thermoplastischem Polyester wie etwa Polyethylenterephtalat PETP, mittels einer Spritzgießmaschine, einem Extruder oder dergleichen Verarbeitungsmaschine wird dieser trockenes Kunststoffgranulat zugeführt. Da angeliefertes Kunststoffgranulat oft eine Feuchtefracht besitzt, muss diese dem Granulat vor seiner Zugabe in die Verarbeitungsmaschine entzogen werden. Zum Entzug der Feuchte dienen im Wesentlichen zylindrische Trockner, in welche das feuchte Granulat eingefüllt wird. Durch das eingefüllte Granulat wird ein heißer Trockenluftstrom hindurchgeleitet, welcher dem Granulat die Feuchte entzieht. Nach ausreichender Verweilzeit des Granulats im heißen Trockenluftstrom kann dem Trockner trockenes Granulat entnommen und der Verarbeitungsmaschine zugeführt werden (EP B 487 829).

Bei größeren Produktionsanlagen, zu denen mehrere Verarbeitungsmaschinen gehören, dienen mehrere Trockner zur Versorgung der Bearbeitungsmaschinen mit trockenem Granulat, die aus einem zentralen Vorratsbehälter für feuchtes Granulat je nach Bedarf beschickt werden. Dazu dienen Förderleitungen, an welche die einzelnen Trockner, auch Fördergeräte genannt, angeschlossen sind. Jede Förderleitung ist mit je einem Saugrüssel versehen, welcher zwecks Entnahme von Granulat in den Vorratsbehälter eintaucht. Das Granulat wird aus dem Vorratsbehälter mittels Unterdruck angesaugt, wobei jedes der Fördergeräte über eine gemeinsame Saugleitung mit dem Ansaugende einer Pumpe verbunden ist.

In den genannten Anlagen sind die einzelnen Trockner räumlich oft weit von beispielsweise etwa 100 m Abstand auseinander stehend angeordnet. Ist jeder Trockner mit einer eigenen Förderleitung gekoppelt, werden die Durchmesser der Förderleitung sowie der Saugleitung nicht nur im Hinblick auf möglichst geringen Granulatabrieb und möglichst geringe Staubentwicklung und möglichst geringen Rohrleitungsverschleiß sondern auch in Abhängigkeit vom Standort des jeweiligen Trockners relativ zum Vorratsbehälter bestimmt. Die Entwicklung von trocknerspezifischen Förderleitungen und Saugleitungen ist jedoch kosten- und zeitaufwendig.

Der Erfindung liegt daher die Aufgabe zugrunde, die eingangs genannte Fördervorrichtung dahingehend zu verbessern, daß der Aufwand für die Förderleitungen und Saugleitungen deutlich herabgesetzt ist.

Dazu ist bei der genannten Fördervorrichtung erfindungsgemäß vorgesehen, daß die Fördergeräte mit der für alle Fördergeräte gemeinsamen Förderleitung verbunden sind, und daß ein am Saugrüssel angeordnetes Stellglied für den Luftmengendurchsatz durch die Förderleitung von einem an der Saugleitung vorgesehenen Luftdruckfühler gesteuert ist. Die Bereitstellung fördergerätespezifischer Förderleitungen und Saugleitungen entfällt. Dennoch wird sichergestellt, daß in der Förderleitung stets ein im Wesentlichen konstanter Ansaugdruck für die Förderung von Granulat in ein Fördergerät herrscht, und zwar unabhängig davon, wie lang die wirksame Förderleitung vom Saugrüssel bis zu dem jeweiligen Fördergerät ist. Die Erfindung ist nicht auf das Fördern von feuchtem Granulat beschränkt, sondern ist überall dort einsetzbar, wo schüttfähiges, auch pulvarförmiges Gut aus einem Vorratsbehälter mehreren Verbrauchern je nach Bedarf zugeleitet werden muss.

Bevorzugt ist, daß jedes Fördergerät an der Förderleitung einen eigenen Anschlußstutzen sowie eine vom Anschlußstutzen zum Fördergerät führende Anschlußleitung aufweist. Dies ermöglicht eine weitgehend geradlinige Verlegung der Förderleitung.

Weiterhin empfiehlt es sich, wenn in Weiterführung der Erfindung eine Signalausgangsleitung des Luftdruckfühlers mit einer Steuerung verbunden ist, welche aus einem Vergleich eines aus der Signalausgangsleitung aufgenommenen Signals mit einem vorgegebenen Sollwert ein Stellsignal bildet und dieses dem Stellglied zuführt.

Im Sinne der Erfindung bewährt sich eine Ausführungsform des Saugrüssels, gemäß welcher der Saugrüssel ein mit der Förderleitung verbundenes stirnseitig offenes Innenrohr sowie ein die stimseitige Öffnung des Innenrohres teilweise abdeckendes und mit dem Stellglied gekoppeltes Bauteil aufweist, welches einfach ein das Innenrohr umgebendes, axial relativ zum Innenrohr verschiebliches Außenrohr sein kann. Das Stellglied kann bevorzugt das Abtriebsglied eines zweckmäßig elektrischen Stellmotors sein, dessen Gehäuse entweder mit dem Bauteil oder mit dem Innenrohr verbunden ist.

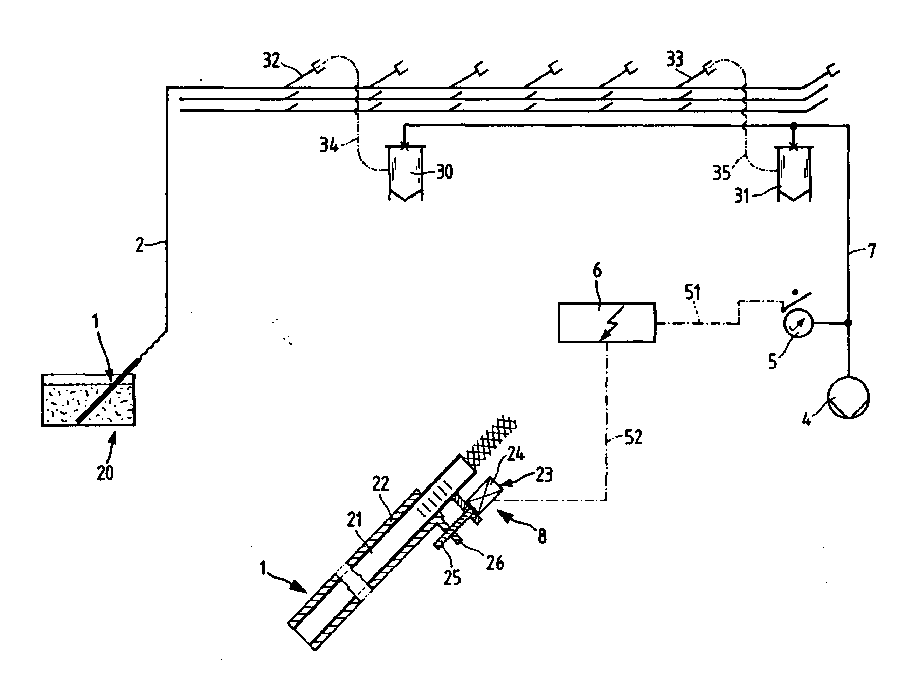

Die Erfindung, deren Tragweite sich aus den beigeschlossenen Patentansprüchen ergibt, wird nachstehend anhand des in der Beschreibung und der beigefügten Figur näher beschriebenen und schematisch gezeigten Ausführungsbeispiels näher erläutert.

Eine material bezogene Förderleitung 2 mündet an einem Ende in einen im ganzen mit 1 bezeichneten Saugrüssel, welcher im dargestellten Betrieb der Fördervorrichtung in ein mit Feuchtelast beladenes Kunststoffgranulat eintaucht. Das Kunststoffgranulat befindet sich in einem Vorratsbehälter 20, welcher durch Nachfüllen von Kunststoffgranulat auf einem ausreichenden Füllstand gehalten wird.

An der Förderleitung 2 sind mehrere längs ihrer Länge beabstandete Anschlußstutzen befestigt, deren Anzahl keiner Beschränkung unterliegt; dargestellt und bezeichnet sind die beiden Anschlußstutzen 32 und 33. Von dem Anschlußstutzen 32 führt eine Anschlußleitung 34 zu der nicht näher erläuterten Beschickungsöffnung eines Fördergerätes 30, welches ein aus der genannten Schrift bekannter Trockner sein kann. Mit dem vom Anschlußstutzen 32 längs der Förderleitung 2 wesentlich beabstandeten Anschlußstutzen 33 ist eine zu der Beschickungsöffnung eines Fördergerätes 31 führende Anschlußleitung 35 verbunden. Nicht dargestellt sind Absperrventile an den Anschlußstutzen 32, 33, die nur dann geöffnet sind, wenn das jeweils angeschlossene Fördergerät 30 und/oder 31 mit feuchtem Granulat aus dem Vorratsbehälter 20 beschickt werden soll.

Die Fördergeräte 30 und 31 sind mit einer gemeinsamen Saugleitung 7 verbunden, welche zu dem Sauganschluß einer Luftpumpe 4 als Unterdruckquelle führt. Die eingeschaltete Luft-pumpe 4 saugt Luft aus der Saugleitung 7 und dem oder den Fördergerät(en) 30, 31 an, für die das zugehörige Absperrventil geöffnet ist, und saugt weiterhin Luft aus dem zwischen dem betreffenden Anschlußstutzen 32 und/oder 33 und dem Saugrüssel 1 befindlichen Abschnitt der Förderleitung 2 mit der Folge an, daß feuchtes Granulat aus dem Vorratsbehälter 20 von dem Luftstrom mitgerissen und dem zugehörigen Fördergerät 30 und/oder 31 über den betreffenden Anschluß-stutzen 32 und/oder 33 und die Anschlußleitung 34 und/oder 35 zugeführt wird.

Der Saugrüssel 1 weist ein Innenrohr 21 auf, über dessen offenes stirnseitiges Ende Granulatkörner aus dem Vorratsbehälter 20 ungehindert in das Innere des Innenrohres (21) eingesaugt werden können. Der vordere Abschnitt des Innenrohres 21 ist von einem axial längs des Innenrohres 21 verschieblichen Außenrohr 22 umgeben, welches über einen radial nach außen abstehenden Steg 26 mit der Abtriebswelle 25 eines elektrischen Stellmotors 23 antriebsmäßig gekoppelt ist. Das Gehäuse 24 des Stellmotors 23 ist mit dem über das hintere Ende des Außenrohres 22 nach hinten vorstehenden Teil des Innenrohres 21 fest verbunden. Durch Aktivieren des Stellmotors 23 wird daher die Abtriebswelle 25 in der einen oder der anderen Umdrehungsrichtung gedreht, so daß das Außenrohr 22 längs des Innenrohres nach vorne oder nach hinten relativ zum Innenrohr 21 verstellt wird, das Außenrohr 22 das offene stirnseitige Ende des Innenrohres 21 mithin mehr oder weniger abdeckt und damit die wirksame Ansaugfläche für die Granulatkörner vergrößert oder verkleinert. Der Stellmotor 23 mit Abtriebswelle 25 wirken als Stellglied, das im ganzen mit 8 bezeichnet ist.

Eine elektrische Steuerung 6 ist eingangsseitig mit einer Signalausgangsleitung 51 aus einem Luftdruckfühler 5 verbunden, welcher den in der Saugleitung 7 herrschenden Luftdruck erfaßt. Ausgangsseitig ist die Steuerung 6 mit einer Signalleitung 52 verbunden, die zu einem Aktivierungseingang des Stellmotors 23 führt. In einem Speicherplatz der Steuerung ist ein vorgegebener Sollwert gespeichert, der den in der Saugleitung erwünschten Luftdruck repräsentiert. Eine Vergleichseinrichtung in der Steuerung 6 vergleicht das von der Siganlausgangsleitung 51 abgenommene Signal, das den Istwert des in der Saugleitung aktuell herschenden Luftdrucks repräsentiert, mit dem Sollwert und bildet ein Stellsignal, welches sie über die Signalleitung 52 dem Stellmotor 23 zuführt. Der Sollwert ist abhängig von der Art des Fördergutes und der benutzten Förderleitungen und sonstigen konstruktiven Besonderheiten der jeweiligen Verwendung der Erfindung. Der jeweils geeignete Sollwert kann in den Speicherplatz der Steuerung eingegeben und beispielsweise bei anderem Fördergut variiert werden.

Damit wird erreicht, daß in der Saugleitung 7 und in dem jeweiligen Abschnitt der Förderleitung 2 im wesentlicher optimaler Saugdruck vorhanden ist, und zwar unabhängig von der Länge des Abschnittes bzw. dem Abstand des oder der betreffenden Fördergeräte vom Vorratsbehälter 20, so dass Fördergeräte mit unterschiedlich langer Förderleitung den gleichen benötigten Saugdruck erfahren und somit eine gleiche Strömungsgeschwindigkeit des Granulates erreicht wird.

## Patentansprüche

1. Fördervorrichtung für schüttfähiges Fördergut, beispielsweise Kunststoffgranulat oder -pulver, mit mehreren Fördergeräten (30, 31) zur Bearbeitung des Fördergutes, einem Vorratsbehälter (20) für das Fördergut sowie mit einer mit einem Saugrüssel (1) versehenen Förderleitung (2) für das Fördergut, und mit einer an die Fördergeräte über eine Saugleitung (7), angeschlossenen Unterdruckquelle (4), wobei die Fördergeräte (30, 31) mit der für alle Fördergeräte gemeinsamen Förderleitung (2) verbunden sind, **dadurch gekennzeichnet, daß** ein am Saugrüssel (1) vorgesehenes Stellglied (8) für den Luftmengendurchsatz durch die Förderleitung (2) von einem an der Saugleitung (7) angeordneten Luftdruckfühler (5) gesteuert ist, wobei der Luftdruckfühler (5) zwischen den Fördergeräten (30, 31) und der Unterdruckquelle (4) angeordnet ist.

2. Vorrichtung nach Anspruch 1, **dadurch gekennzeichnet, daß** jedes Fördergerät an der Förderleitung einen eigenen Anschlußstutzen (32, 33) sowie eine vom Anschlußstutzen zum Fördergerät führende Anschlußleitung (34, 35) aufweist.

3. Vorrichtung nach Anspruch 1 oder 2, **dadurch gekennzeichnet, daß** eine Signalausgangsleitung (51) des Luftdruckfühlers (5) mit einer Steuerung (6) verbunden ist, welche aus einem Vergleich eines aus der Signalausgangs leitung aufgenommenen Signals mit einem vorgegebenen Sollwert ein Stellsignal bildet und dem Stellglied (8) zuleitet.

4. Vorrichtung nach Anspruch 1 oder 2, **dadurch gekennzeichnet, daß** der Saugrüssel (1) ein mit der Förderleitung (2) verbundenes stirnseitig offenes Innenrohr (21) sowie ein die stirnseitige Öffnung des Innenrohres teilweise abdeckendes und mit dem Stellglied (8) gekoppeltes Bauteil (22) aufweist

5. Vorrichtung nach Anspruch 3, **dadurch gekennzeichnet, daß** das Bauteil ein das Innenrohr umgebendes axial relativ zum Innenrohr verschiebliches Außenrohr ist.

6. Vorrichtung nach einem der vorstehenden Ansprüche, **dadurch gekennzeichnet, dass** das Stellglied (8) das Abtriebsglied (25) eines Stellmotors (23) ist, dessen Gehäuse (24) mit dem Bauteil (22) oder dem Innenrohr (21) verbunden ist.

## Claims

1. Conveying apparatus for particulate material to be conveyed, for example granulated or pulverent plastics material, said conveying apparatus having a plurality of handling devices (30, 31) for processing the material to be conveyed, a hopper (20) for the material to be conveyed as well as a conveying line (2) provided with a suction pipe (1) for the material to be conveyed, and a vacuum source (4) connected to the handling devices via a suction line (7), wherein the handling devices (30, 31) are connected to the conveying line (2), which is common to all handling devices, **characterised in that** a control member (8), which is provided on the suction pipe (1) and is for controlling the air flow rate through the conveying line (2), is controlled by an air pressure sensor (5) disposed on the suction line (7), wherein the air pressure sensor (5) is disposed between the handling devices (30, 31) and the vacuum source (4).

2. Apparatus according to claim 1, **characterised in that** each conveying device includes on the conveying line its own connection piece (32, 33) as well as a connecting line (34, 35) leading from the connection piece to the conveying device.

3. Apparatus according to claim 1 or 2, **characterised in that** a signal output line (51) of the air pressure sensor (5) is connected to a controlling means (6), which forms a control signal from a comparison between a signal received from the signal output line and a predetermined required value and passes it to the control member (8).

4. Apparatus according to claim 1 or 2, **characterised in that** the suction pipe (1) includes an inner tube (21), which is connected to the conveying line (2) and is open at the end, as well as a component (22), which partially covers the end opening of the inner tube and is coupled to the control member (8).

5. Apparatus according to claim 3, **characterised in that** the component is an outer tube, which surrounds the inner tube and is axially displaceable relative to the inner tube.

6. Apparatus according to one of the preceding claims, **characterised in that** the control member (8) is the driving member (25) of a servomotor (23), the housing (24) of which is connected to the component (22) of the inner tube (21).

## Revendications

1. Appareil pour transporter des produits en vrac, comme du granulat ou de la poudre de matière plastique, avec plusieurs dispositifs transporteurs (30, 31) pour le traitement du produit, un réservoir de stockage (20) du produit ainsi qu'une conduite de transport (2) du produit, munie d'un tube flexible d'aspiration (1), et une source de dépression (4) raccordée aux dispositifs transporteurs par une conduite d'aspiration (7), dans lequel les dispositifs transporteurs (30, 31) sont reliés à la conduite de transport (2) commune à tous les dispositifs transporteurs,
**caractérisé en ce qu'**
un élément de réglage (8) du débit d'air à travers la conduite de transport (2), prévu sur le tube flexible d'aspiration (1), est commandé par un volet d'admission d'air (5) disposé sur la conduite d'aspiration (7), le volet d'admission d'air (5) étant disposé entre les dispositifs transporteurs (30, 31) et la source de dépression (4).

2. Appareil selon la revendication 1,
**caractérisé en ce que**
chaque dispositif transporteur présente sur la conduite de transport sa propre tubulure de raccordement (32, 33) ainsi qu'une conduite de raccordement (34, 35) conduisant de la tubulure de raccordement au dispositif transporteur.

3. Appareil selon la revendication 1 ou 2,
**caractérisé en ce qu'**
une ligne de sortie du signal (51) du volet d'admission d'air (5) est reliée à une commande (6) qui, par la comparaison d'un signal enregistré à partir de la ligne de sortie du signal avec une valeur de consigne prédéterminée, forme un signal de régulation et transmet celui-ci à l'élément de réglage (8).

4. Appareil selon la revendication 1 ou 2,
**caractérisé en ce que**
le tube flexible d'aspiration (1) présente un tube intérieur (21) ouvert côté frontal, relié à la conduite de transport (2), ainsi qu'un composant (22) recouvrant en partie l'ouverture frontale du tube intérieur et couplé à l'élément de réglage (8).

5. Appareil selon la revendication 3,
**caractérisé en ce que**
le composant est un tube extérieur entourant le tube intérieur, mobile dans le sens axial par rapport au tube intérieur.

6. Appareil selon l'une quelconque des revendications précédentes,
**caractérisé en ce que**
l'élément de réglage (8) est l'arbre de sortie (25) d'un servomoteur (23), dont le carter (24) est relié au composant (22) ou au tube intérieur (21).
